(19) Europäisches Patentamt / European Patent Office / Office européen des brevets

(11) **EP 2 386 926 B1**

(12) **FASCICULE DE BREVET EUROPEEN**

(45) Date de publication et mention
de la délivrance du brevet:
**26.06.2013 Bulletin 2013/26**

(51) Int Cl.:
***G05D 1/08*** *(2006.01)*      ***B64C 25/40*** *(2006.01)*
***G05D 1/00*** *(2006.01)*

(21) Numéro de dépôt: **11164205.4**

(22) Date de dépôt: **28.04.2011**

(54) **Procédé de gestion d'un mouvement de lacet d'un aéronef roulant au sol**

Steuerungsverfahren einer Gierachsebewegung eines auf dem Boden rollenden Luftfahrzeugs

Method for controlling a yaw axis movement of a taxiing aircraft

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.05.2010 FR 1053599**

(43) Date de publication de la demande:
**16.11.2011 Bulletin 2011/46**

(73) Titulaire: **Messier-Bugatti-Dowty
78140 Velizy Villacoublay (FR)**

(72) Inventeurs:
• **Lemay, David
  92370 Chaville (FR)**
• **Frank, David
  75013 Paris (FR)**
• **Basset, Michel
  68990 Heimsbrunn (FR)**
• **Chamaillard, Yann
  45130 Le Bardon (FR)**

(74) Mandataire: **Parzy, Benjamin Alain et al
Cabinet Boettcher
16, rue Médéric
75017 Paris (FR)**

(56) Documents cités:
**WO-A1-2007/096646      WO-A2-2006/078322
US-A1- 2009 143 940      US-A1- 2009 218 440**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un procédé de gestion d'un mouvement de lacet d'un aéronef roulant au sol.

On rappelle qu'un aéronef comporte un train d'atterrissage, qui comporte plusieurs atterrisseurs, dans le but d'assurer une interface entre l'aéronef et le sol.

ARRIERE PLAN TECHNOLOGIQUE DE L'INVENTION

Habituellement, un aéronef roule au sol en utilisant ses propulseurs. Ainsi les roues du train d'atterrissage de l'aéronef tournent en roue libre lors d'un déplacement de l'aéronef au sol. Depuis peu, l'intérêt des avionneurs se porte sur des dispositifs de déplacement autonome pour faire tourner certaines roues et ainsi déplacer un aéronef au sol sans l'assistance de ses propulseurs. Les roues du train d'atterrissage équipées de tels dispositifs ne tournent donc pas en roue libre mais tournent à une vitesse de rotation imposée par le moteur du dispositif de déplacement autonome associé et ce quel que soit le mouvement de l'aéronef au sol. Les documents US 2009/218440 et WO 2006/078322 décrivent ainsi des aéronefs comportant des roues équipées de tels dispositifs.

Dans le cas d'un mouvement de lacet au sol, une contrainte cinématique entre en jeu : les roues doivent tourner à une vitesse de rotation différente selon leur éloignement par rapport au centre instantané de rotation de l'aéronef. Quand les roues tournent en roue libre, cette contrainte cinématique ne pose pas de problème. En revanche, quand les roues sont entraînées en rotation par l'intermédiaire des dispositifs de déplacement autonome, cette contrainte cinématique est à prendre en considération pour que les dispositifs de déplacement autonome entraînent les roues en rotation à une vitesse adéquate.

Il a ainsi été pensé de calculer la vitesse de rotation adéquate de chaque roue équipée d'un dispositif de déplacement autonome en s'appuyant sur la relation suivante, donnant l'écart relatif de vitesse de rotation entre deux roues, équipées ou non d'un dispositif de déplacement autonome, lors d'un mouvement de lacet d'un aéronef:

$$\Delta\dot{\omega}_{i-j} = \frac{l_{i-j}}{R_{roue}}\dot{\varphi}_{avion}$$

Où $\Delta\dot{\omega}_{i-j}$ est l'écart relatif entre la vitesse de rotation d'une roue i et celle d'une roue j ;
où $l_{i-j}$ est la distance entre la roue i et la roue j;
où $\dot{\varphi}_{avion}$ est la vitesse de lacet de l'avion ;
où $R_{roue}$ est le rayon de roulement des deux roues i et j (en admettant que chaque roue i et j ait le même rayon de roulement).

On rappelle que pour une roue, le rayon de roulement est un rayon fictif obtenu par le rapport d'une vitesse de translation de la roue, dans une direction horizontale, à une vitesse de rotation de la roue.

Toutefois, le rayon de roulement s'avère complexe à déterminer puisqu'il dépend de nombreux facteurs comme la structure du pneumatique de la roue, l'usure du pneumatique, la pression de gonflage du pneumatique ... Or une mauvaise estimation du rayon de roulement d'une roue conduit à une mauvaise estimation de la vitesse dé rotation adéquate de la roue. Le dispositif de déplacement autonome correspondant impose ainsi à la roue une vitesse inadaptée ce qui crée de fortes contraintes mécaniques dans l'atterrisseur comportant ledit dispositif de déplacement autonome: ceci conduit à une usure accélérée du pneumatique et de l'atterrisseur voir à un endommagement de l'atterrisseur. Par ailleurs, le dispositif de déplacement autonome se trouve davantage sollicité, ce qui augmente la puissance totale instantanée développée par l'ensemble des dispositifs de déplacement autonome. Ceci entraîne une augmentation de la consommation du dispositif de déplacement autonome et une diminution du rendement du dispositif de déplacement autonome.

OBJET DE L'INTENTION

L'invention a pour objet un procédé de gestion d'un mouvement de lacet d'un aéronef roulant au sol permettant de générer des consignes pour les dispositifs de déplacement autonome qui conduisent à des vitesses de rotation des roues compatibles avec le mouvement de lacet.

BREVE DESCRIPTION DE L'INVENTION

En vue de la réalisation de ce but, on propose un procédé de gestion d'un mouvement de lacet d'un aéronef roulant au sol, l'aéronef comportant des roues équipées chacune d'un dispositif de déplacement autonome, dans lequel on élabore des commandes à destination des dispositifs de déplacement autonome de sorte que les dispositifs de déplacement autonome contribuent au mouvement de lacet.

Selon l'invention, le procédé comporte les étapes de:

- estimer, à chaque instant du mouvement de lacet :

  • une puissance totale instantanée développée par l'ensemble des dispositifs de déplacement autonome en réponse aux commandes ;
  • une accélération angulaire instantanée moyenne de l'ensemble des roues;

- adapter les commandes des dispositifs de déplacement autonome de sorte que la puissance totale instantanée développée par l'ensemble des dispositifs de déplacement autonome soit minimisée, tout en conservant l'accélération angulaire instantanée moyenne.

Le procédé permet d'adapter les commandes sans avoir à estimer les rayons de roulement des roues. La puissance totale est très simplement estimée par exemple par observation d'un couple délivré par chacun des dispositifs, du courant d'alimentation de chacun des dispositifs ... Quant à l'accélération angulaire moyenne, elle est simplement obtenue en moyennant l'ensemble des accélérations angulaires des roues concernées.

BREVE DESCRIPTION DES DESSINS

L'invention sera mieux comprise à la lumière de la description qui suit d'un mode de réalisation particulier non limitatif de l'invention en référence aux figures ci-jointes parmi lesquelles:

- la figure 1 est une vue de dessus schématique d'un aéronef pour lequel le procédé de l'invention est mis en oeuvre;
- la figure 2 est un schéma de mise en oeuvre d'une partie du procédé de l'invention.

DESCRIPTION DETAILLEE DE L'INVENTION

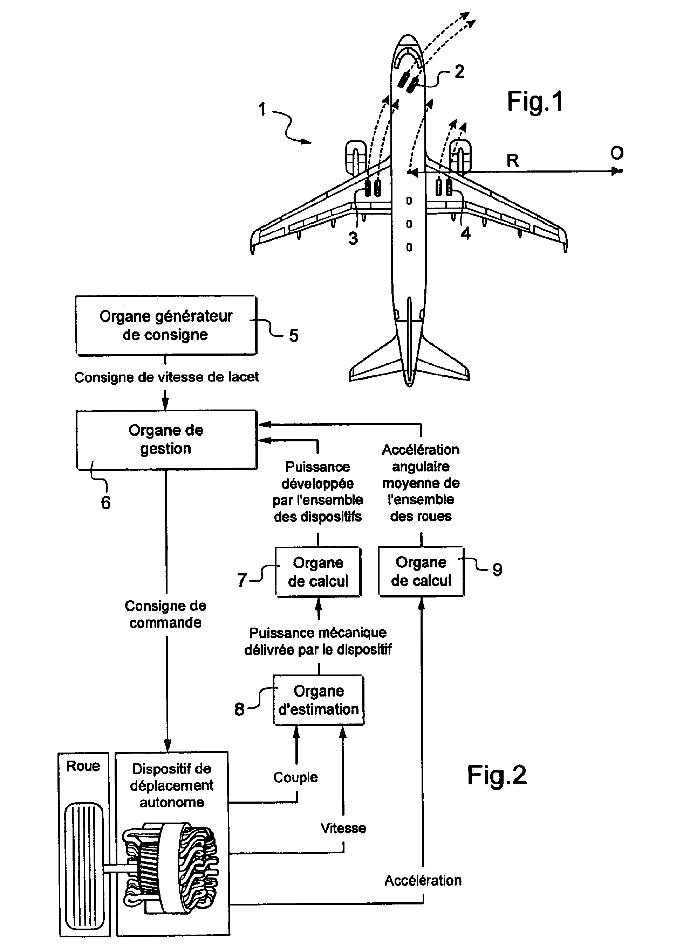

En référence à la figure 1, le procédé selon l'invention est ici détaillé en référence à un aéronef 1 comportant un train d'atterrissage qui comprend un atterrisseur auxiliaire 2 à l'avant de l'aéronef et deux atterrisseurs principaux 3,4 disposés respectivement à droite et à gauche du fuselage. Chaque atterrisseur 2,3,4 comporte ici deux roues, toutes les roues étant équipées d'un dispositif de déplacement autonome. Les dispositifs de déplacement autonome étant bien connus de l'art antérieur, ils ne seront pas décrits plus en détail. On rappellera simplement qu'ils comportent un moteur d'entraînement des roues.

Lors d'un mouvement de lacet au sol de l'aéronef 1, chaque roue suit une trajectoire au sol différente selon son éloignement par rapport au centre instantané de rotation de l'aéronef 1. Chaque roue doit donc adopter une vitesse de rotation différente suivant sa trajectoire pour que l'aéronef 1 réalise le mouvement de lacet souhaité sans sur-sollicitation des atterrisseurs 2,3,4.

Dans le cas illustré, le mouvement de lacet est un virage sensiblement circulaire de rayon R et de centre instantané de rotation O. Plus la roue est éloignée du centre instantané de rotation O, plus la distance qu'elle parcourra sera importante et plus sa vitesse de rotation devra être élevée.

En référence à la figure 2, selon l'invention, l'aéronef 1 comporte un organe générateur de consigne 5 pour générer une consigne de vitesse de lacet de l'aéronef 1. L'organe générateur de consigne 5 est relié à un organe de gestion 6 qui élabore des commandes à destination des dispositifs de déplacement autonome. Les commandes sont élaborées de sorte que l'ensemble des dispositifs de déplacement autonome répondent à la consigne de vitesse de lacet de l'aéronef 1 et que chaque dispositif de déplacement autonome contribue au mouvement de lacet en entraînant en rotation la roue à laquelle il est associé à une vitesse de rotation adéquate.

A cet effet, l'organe de gestion 6 est relié à un premier organe de calcul 7 qui estime à chaque instant du mouvement de lacet une puissance instantanée développée par l'ensemble des dispositifs de déplacement autonome en réponse aux commandes. Selon un mode de réalisation préféré, un organe d'estimation 8 est associé à chaque dispositif de déplacement autonome de l'aéronef 1 de sorte à estimer, à tout instant du mouvement de lacet de l'aéronef 1, une puissance mécanique instantanée délivrée par ledit dispositif de déplacement autonome à la roue à laquelle il est associé. A cet effet, l'organe d'estimation 8 reçoit du dispositif de déplacement autonome des informations de vitesse de rotation instantanée de la roue et de couple mécanique instantané délivré à la roue. Le premier organe de calcul 7 reçoit ainsi de chaque organe d'estimation 8 une information de la puissance mécanique délivrée par un dispositif de déplacement autonome à la roue à laquelle il est associé et en déduit la puissance instantanée développée par l'ensemble des dispositifs de déplacement autonome.

L'organe de gestion 6 est également relié à un deuxième organe de calcul 9 qui estime à chaque instant du mouvement de lacet une accélération angulaire moyenne instantanée de l'ensemble des roues, le deuxième organe de calcul 9 recevant de chaque dispositif de déplacement autonome, à chaque instant du mouvement de lacet, une information d'accélération angulaire instantanée de la roue associée.

À partir de l'information de puissance totale instantanée développée par l'ensemble des dispositifs de déplacement autonome et de l'information d'accélération angulaire moyenne de l'ensemble des roues, l'organe de gestion 6 adapte les commandes des dispositifs de déplacement autonome de sorte que la puissance totale instantanée développée par l'ensemble des dispositifs de déplacement autonome soit minimisée tout en conservant l'accélération angulaire moyenne. Le procédé peut également s'exprimer par le problème d'optimisation suivant:

$$min\ P_{tot} = \sum_{i=1}^{N} C_i . \dot{\omega}_i$$

sous la contrainte

$$\bar{\dot{\omega}} = \frac{1}{N} \sum_{i=1}^{N} \dot{\omega}_i = constante$$

où $P_{tot}$ est le critère de coût représentant la puissance totale instantanée développée par l'ensemble des dispositifs de déplacement autonome;
où $N$ est le nombre de roues prises en compte dans le critère;
où $C_i$ est le couple mécanique délivré à la roue i;
où $\dot{\omega}_i$ est l'accélération angulaire de la roue i;
où $\bar{\dot{\omega}}$ est l'accélération angulaire moyenne de rotation de l'ensemble des roues.

Bien entendu l'invention n'est pas limitée aux modes de mise en oeuvre décrits et on peut y apporter des variantes de réalisation sans sortir du cadre de l'invention tel que défini par les revendications.

En particulier, bien que l'on ait dit que la puissance totale instantanée développée par l'ensemble des dispositifs de déplacement autonome était estimée à partir de la puissance mécanique et plus précisément à partir du couple mécanique délivré par chaque dispositif de déplacement autonome à la roue à laquelle il est associé, on pourra exprimer la puissance totale instantanée par d'autres moyens. En particulier, connaissant la tension aux bornes de chacun des dispositifs de déplacement autonome, on pourra, en déterminant une intensité électrique consommée par chaque dispositif de déplacement autonome, estimer la puissance consommée par chaque dispositif de déplacement autonome pour entraîner en rotation la roue à laquelle il est associé. On en estimera ainsi la puissance totale instantanée.

Bien que l'on ait indiqué que le train d'atterrissage comportait un atterrisseur auxiliaire à l'avant 2 et deux atterrisseurs principaux à l'arrière 3, 4, le train pourra bien entendu avoir une toute autre disposition. En outre, le train d'atterrissage pourra comporter un tout autre nombre d'atterrisseurs et chaque atterrisseur pourra comporter un tout autre nombre de roues. Seulement certaines roues du train d'atterrissage pourront être équipées d'un dispositif de déplacement autonome.

## Revendications

1. Procédé de gestion d'un mouvement de lacet d'un aéronef (1) roulant au sol, l'aéronef (1) comportant des roues équipées chacune d'un dispositif de déplacement autonome, dans lequel on élabore des commandes à destination des dispositifs de déplacement autonome de sorte que les dispositifs de déplacement autonome contribuent au mouvement de lacet, le procédé étant **caractérisé en ce qu'**il comporte les étapes de:

   - estimer, à chaque instant du mouvement de lacet:

   • une puissance totale instantanée développée par l'ensemble des dispositifs de déplacement autonome en réponse aux commandes;
   • une accélération angulaire instantanée moyenne de l'ensemble des roues;

   - adapter les commandes des dispositifs de déplacement autonome de sorte que la puissance totale instantanée développée par l'ensemble des dispositifs de déplacement autonome soit minimisée, tout en conservant l'accélération angulaire instantanée moyenne.

2. Procédé de gestion selon la revendication 1, comportant en outre l'étape d'estimer la puissance totale instantanée à partir d'une puissance mécanique délivrée par chaque dispositif de déplacement autonome à la roue à laquelle il est associé.

3. Procédé de gestion selon la revendication 1, comportant en outre l'étape d'estimer la puissance totale instantanée à partir d'un couple mécanique délivré par chaque dispositif de déplacement autonome à la roue à laquelle il est associé.

4. Procédé de gestion selon la revendication 1, comportant en outre l'étape d'estimer la puissance totale instantanée à partir d'une puissance consommée par chaque dispositif de déplacement autonome.

5. Procédé de gestion selon la revendication 1, comportant en outre l'étape d'estimer la puissance totale instantanée à partir d'une intensité électrique consommée par chaque dispositif de déplacement autonome.

## Patentansprüche

1. Steuerungsverfahren zur Steuerung einer Gierbewegung eines Luftfahrzeugs (1), das auf dem Boden rollt, umfassend Räder, die jeweils mit einer autonomen Antriebsvorrichtung ausgestattet sind, bei dem Befehle für die autonomen Antriebsvorrichtungen so erzeugt werden, dass die autonomen Antriebsvorrichtungen zur Gierbewegung beitragen, wobei das Verfahren **dadurch gekennzeichnet ist, dass** es die folgenden Schritte umfasst:

   - zu jedem Zeitpunkt der Gierbewegung wird ermittelt:

   • eine durch die Gesamtheit der autonomen Antriebsvorrichtungen als Antwort auf die Befehle entwickelte momentane Gesamtleistung;
• eine mittlere momentane Winkelbeschleunigung aller Räder;

- die Befehle der autonomen Antriebsvorrichtungen werden so adaptiert, dass die durch die Gesamtheit der autonomen Antriebsvorrichtungen entwickelte momentane Gesamtleistung minimiert ist unter Beibehaltung der mittleren momentanen Winkelbeschleunigung.

**2.** Steuerungsverfahren nach Anspruch 1, umfassend des Weiteren den Schritt, die momentane Gesamtleistung ausgehend von einer mechanischen Leistung zu ermitteln, die von jeder autonomen Antriebsvorrichtung an das Rad, mit dem sie verbunden ist, abgegeben wird.

**3.** Steuerungsverfahren nach Anspruch 1, des Weiteren umfassend den Schritt, die momentane Gesamtleistung ausgehend von einem mechanischen Moment zu ermitteln, das von jeder autonomen Antriebsvorrichtung an das Rad, mit dem sie verbunden ist, abgegeben wird.

**4.** Steuerungsverfahren nach Anspruch 1, des Weiteren umfassend den Schritt, die momentane Gesamtleistung von einer durch jede autonome Antriebsvorrichtung aufgenommenen Leistung zu ermitteln.

**5.** Steuerungsverfahren nach Anspruch 1, des Weiteren umfassend den Schritt, die momentane Gesamtleistung von einer durch jede autonome Antriebsvorrichtung aufgenommenen elektrischen Energie zu ermitteln.

## Claims

**1.** A management method for managing a turning movement of an aircraft (1) taxiing on the ground, the aircraft (1) having wheels each fitted with an independent drive device, in which method commands are generated for the independent drive devices so that independent those drive devices contribute to the turning movement, the method being **characterized in that** it comprises the steps of:

• estimating at each instant during the turning movement:

• an instantaneous total power developed by all of the independent drive devices in response to the commands; and
• a mean of instantaneous angular acceleration of all of the wheels; and
• adapting the commands to the independent drive devices such that the total instantaneous power developed by all of the independent drive devices is minimized, while conserving the mean of instantaneous angular accelerations.

**2.** A management method according to claim 1, further including the step of estimating the instantaneous total power from a mechanical power delivered by each independent drive device to the wheel with which it is associated.

**3.** A management method according to claim 1, further including the step of estimating the instantaneous total power from a mechanical torque delivered by each independent drive device to the wheel with which it is associated.

**4.** A management method according to claim 1, further including the step of estimating the instantaneous total power from a power consumed by each independent drive device.

**5.** A management method according to claim 1, further including the step of estimating the instantaneous total power from an electric current consumed by each independent drive device.

Fig.1

1

2

R

O

3

4

Organe générateur
de consigne

5

Consigne de vitesse de lacet

Organe de
gestion

6

Puissance
développée
par l'ensemble
des dispositifs

Accélération
angulaire
moyenne de
l'ensemble
des roues

Organe
de calcul

7

Organe
de calcul

9

Consigne de
commande

Puissance mécanique
délivrée par le dispositif

Organe
d'estimation

8

Fig.2

Roue

Dispositif de
déplacement
autonome

Couple

Vitesse

Accélération

**EP 2 386 926 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2009218440 A
- WO 2006078322 A